# EUROPEAN PATENT APPLICATION

(11) **EP 4 035 542 A1**
(43) Date of publication of application: **03.08.2022**
(21) Application number: 20867355.8
(22) Date of filing: 18.09.2020
(51) Int. Cl.: A24F 40/00

(54) **ELECTRONIC ATOMIZING DEVICE**

(30) Priority: 29.09.2019 CN 201910932621
(71) Applicant: Shenzhen Merit Technology Co.,Ltd., Shenzhen, Guangdong 518105 (CN)
(72) Inventor: CHEN, Haichao, Shenzhen, Guangdong 518105 (CN); LIAO, Yancheng, Shenzhen, Guangdong 518105 (CN)
(74) Representative: De Arpe Tejero, Manuel
(86) International application number: PCT/CN2020/116294
(87) International publication number: WO 2021/057625

(57) **Abstract**

An electronic atomizing device (100), comprising a smoke tube (10), a heater assembly (20), an inductive switch, and a reset member. The smoke tube (10) is used for inserting a cigarette (200). The heater assembly (20) can move in the smoke tube (10) to turn on the inductive switch, and a battery (40) is enabled to power the heater assembly (20). The reset member is used for applying reset force to the heater assembly (20). The inductive switch used for detecting insertion of the cigarette (200) is provided in the electronic atomizing device (100), to control the heater assembly (20) to heat, so that automatic detection of cigarette (200) insertion can be achieved, dry burning of the heater assembly (20) is avoided, and the intelligent degree of the electronic atomizing device (100) can be improved. In addition, the reset force applied by the reset member to the heater assembly (20) can reset the heater assembly (20) after the heater assembly (20) emits heat, so that continuous heating of the heater assembly (20) can be realized only by one-time triggering, and the situation that the cigarette (200) stops being heated due to accidental disconnection of the inductive switch in the heating process is avoided.

## Description

### TECHNICAL FIELD

The present application relates to the technical field of electronic atomizing devices, and specifically to an electronic atomizing device.

### BACKGROUND

As a substitute for cigarettes, electronic cigarettes have attracted more and more people's attention and favor due to their advantages of use safety, convenience, health, and environmental protection.

At present, buttons of electronic cigarettes adopt mechanical structures, and signal input is realized by pressing the buttons. However, mechanical abrasion will occur during processes of pressing the buttons, which causes service life of the buttons to be greatly attenuated, so that working performance is unstable. In addition, electronic cigarettes are portable products, the design of the buttons is prone to cause false touches during carrying, and result in that an electronic cigarette activate a corresponding heating function. At this time, a heating element is in a high-temperature working state; if there is no cartridge in a cartridge cavity that conducts heat for it at the same time, the heating element will be in a dry-burning state, which is likely to damage the heating element, causing service life of the electronic cigarette to be greatly attenuated.

### SUMMARY OF THE DISCLOSURE

The present application provides an electronic atomizing device in order to solve the technical problem of causing a heating element to be dry-burned due to a false touch.

In order to solve the above technical problem, a technical solution adopted by the present application is to provide an electronic atomizing device. The electronic atomizing device includes a smoke tube, a heater assembly, an inductive switch, and a reset member; the smoke tube is configured to insert a cigarette; the heater assembly is at least partially located in the smoke tube and configured to heat the cigarette; the heater assembly is capable of moving in the smoke tube to turn on the inductive switch and enable a battery to power the heater assembly; the reset member is configured to apply reset force to the heater assembly.

Optionally, the heater assembly is connected in transmission with the reset member and arranged slidably relative to the smoke tube.

Optionally, the electronic atomizing device further includes a circuit board, and the heater assembly includes a power connection terminal; the reset member includes an electrode seat, a power electrode, and a resilient member, the electrode seat is disposed at a side of the heater assembly distancing from the smoke tube, the power electrode is disposed on the electrode seat, the resilient member is disposed in the power electrode to make the power electrode resiliently abut with the power connection terminal, and the power electrode is electrically connected with the battery through the circuit board to power the heater assembly when the inductive switch is turned on.

Optionally, the power electrode includes a mounting part and an abutting part, the mounting part is disposed on the electrode seat and electrically connected with the battery, a surface of the mounting part close to the heater assembly defines a mounting hole, the abutting part is slidably inserted in the mounting hole, the resilient member is received in the mounting hole and sandwiched between a bottom wall of the mounting hole and an end surface of the abutting part, and another opposite end surface of the abutting part protrudes from the mounting part.

Optionally, an inner surface of a circumference of the mounting hole protrudes inwards to define a limiting portion, an end of the abutting part inserted in the mounting hole is provided with a blocking portion, a cross-sectional area of the blocking portion perpendicular to a moving direction of the abutting part is larger than an area of a region enclosed by the limiting portion, and another end of the abutting part runs through and extends out of the region enclosed by the limiting portion.

Optionally, a side wall of the abutting part is in contact with a side wall of the limiting portion for electrically connection; or a side wall of the blocking portion is in contact with a side wall of the mounting hole for electrically connection; or the resilient member is a conductive member, and the resilient member is electrically connected with the mounting part and the abutting part respectively.

Optionally, the heater assembly further has a detection connection terminal, the inductive switch is a detection electrode, the detection electrode is disposed on the electrode seat, and the detection electrode is disposed to be spaced from the detection connection terminal; when the cigarette is inserted in the smoke tube, the heater assembly abuts against and presses the power electrode to make the detection electrode contact the detection connection terminal and form a sensing signal.

Optionally, the detection electrode and the power electrode are located on a surface of the electrode seat facing the heater assembly, and a height of the detection electrode protruding from a surface of the electrode seat is less than a first height but larger than or equal to a second height; wherein the first height is a distance between the heater assembly and the electrode seat when there is no cigarette in the smoke tube, and the second height is a height of the power electrode protruding from the surface of the electrode seat when being completely pressed.

Optionally, the heater assembly includes a base and a heating member, the heating member is connected with the base, and an end of the heating member distancing from the base is at least partially located in the smoke tube.

Optionally, the electronic atomizing device further includes a casing and a base mounting cavity, both the base mounting cavity and the smoke tube are located in the casing, the base mounting cavity is communicated with the smoke tube, and the base is slidably disposed in the base mounting cavity.

Optionally, the inductive switch includes a Hall sensor and a magnet corresponding to the Hall sensor, one of the Hall sensor and the magnet is disposed in the base mounting cavity and the other is disposed on the base; when the Hall sensor senses that a magnet field strength of the magnet is larger than a preset value, the Hall sensor generates a sensing signal.

Optionally, the inductive switch is a proximate sensor, the proximate sensor is disposed on the heater assembly, the base mounting cavity, or the reset member.

Optionally, the inductive switch is a microswitch, the microswitch is disposed on a bottom of the heater assembly, a side surface of the heater assembly, a bottom of the base mounting cavity, a side wall of the base mounting cavity, or the reset member.

Optionally, the inductive switch is a pressure sensor, the pressure sensor is disposed on a bottom of the heater assembly, in the base mounting cavity, or on the reset member.

Advantageous effect of the present application is that: in the present application, an electronic atomizing device is provided therein with an inductive switch, and it is continuously detected through the inductive switch whether there is a cigarette inserted in a smoke tube; and when it is detected that a cigarette is inserted in the smoke tube, a heater assembly is controlled to emit heat and used to heat the cigarette. In this way, automatic detection of insertion of the cigarette can be achieved, a situation of dry burning of heater assembly caused when no cigarette is inserted is avoided, and an intelligent degree of the electronic atomizing device can be improved. In addition, a reset force applied by a reset member to the heater assembly can reset the heater assembly after the heater assembly emits heat, so that the heater assembly continuously heats, and stops heating until a preset condition is met; thus, this embodiment can realize continuous heating of the heater assembly by only one triggering, and avoid a situation that heating for the cigarette is stopped due to accidental disconnection of the inductive switch in a heating process, thereby improving users' experience.

### BRIEF DESCRIPTION OF THE DRAWINGS

In order to describe technical solutions in embodiments of the present application more clearly, drawings required being used in description of the embodiments will be simply introduced below. Obviously, the drawings in the following description are merely some embodiments of the present application. For one of ordinary skill in the art, it is also possible to obtain other drawings according to these drawings without paying any creative work.
FIG. 1 is a schematic view of an isometric structure of a used state of an electronic atomizing device in an embodiment of the present application.
FIG. 2 is a schematic view of a cut-away structure of the electronic atomizing device in FIG. 1.
FIG. 3 is a schematic view of an isometric structure of a heater assembly in FIG. 2.
FIG. 4 is a schematic view of a cut-away structure of the heater assembly in FIG. 3.
FIG. 5 is a schematic view of a cut-away structure of a reset member in FIG. 3.
FIG. 6 is a schematic view of an isometric structure of the reset member in FIG. 3.
FIG. 7 is another schematic view of the cut-away structure of the electronic atomizing device in FIG. 1.
FIG. 8 is a partially enlarged structural schematic view of the electronic atomizing device in FIG. 7.
FIG. 9 is a partially enlarged schematic view of a cut-away structure of an electronic atomizing device in another embodiment of the present application.
FIG. 10 is a partially enlarged schematic view of a cut-away structure of an electronic atomizing device in another embodiment of the present application.
FIG. 11 is a partially enlarged schematic view of a cut-away structure of an electronic atomizing device in another embodiment of the present application.
FIG. 12 is a partially enlarged schematic view of a cut-away structure of an electronic atomizing device in another embodiment of the present application.
FIG. 13 is a partially enlarged schematic view of a cut-away structure of an electronic atomizing device in another embodiment of the present application.

### DETAILED DESCRIPTION

Technical solutions in embodiments of the present application will be clearly and completely described below in combination with the drawings in the embodiments of the present application. Obviously, the described embodiments are only some embodiments of the present application, rather than all embodiments. Based on the embodiments in the present application, all other embodiments obtained by one of ordinary skill in the art without creative work shall fall within the protection scope of the present application.

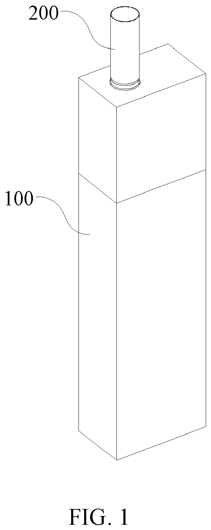

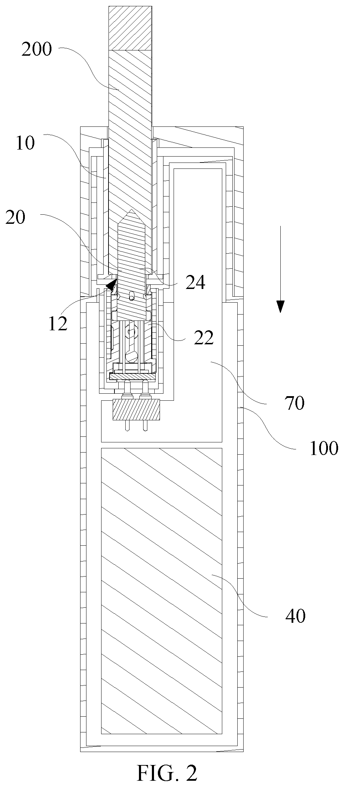

The present application provides an electronic atomizing apparatus 100. Referring to FIG. 1 and FIG. 2, FIG. 1 is a schematic view of an isometric structure of a used state of an electronic atomizing device in an embodiment of the present application, and FIG. 2 is a schematic view of a cut-away structure of the electronic atomizing device in FIG. 1. The electronic atomizing device 100 includes a smoke tube 10, a heater assembly 20, an inductive switch (not shown in the drawings), and a reset member (not shown in the drawings). Among them, the smoke tube 10 is configured to insert a cigarette 200; the heater assembly 20 is at least partially located in the smoke tube 10 and configured to heat the cigarette 200. The inductive switch is configured to detect insertion of the cigarette 200 in the smoke tube 10 and control the heater assembly 20 to emit heat when detecting that the cigarette 200 is inserted in the smoke tube 10. The reset member is configured to apply reset force to the heater assembly 20.

In this embodiment of the present application, the electronic atomizing device 100 is provided therein with the inductive switch, and it is continuously detected through the inductive switch whether there is a cigarette 200 inserted in the smoke tube 10; and when it is detected that a cigarette 200 is inserted in the smoke tube 10, the heater assembly 20 is controlled to emit heat and used to heat the cigarette 200. In this way, automatic detection of insertion of the cigarette 200 can be achieved, a situation of dry burning of heater assembly 20 caused when no cigarette 200 is inserted is avoided, and an intelligent degree of the electronic atomizing device 100 can be improved. In addition, a reset force applied by a reset member to the heater assembly 20 can reset the heater assembly 20 after the heater assembly 20 emits heat, so that the heater assembly 20 continuously heats, and stops heating until a preset condition is met; thus, this embodiment can realize continuous heating of the heater assembly 20 by only one triggering, and avoid a situation that heating for the cigarette 200 is stopped due to accidental disconnection of the inductive switch in a heating process, thereby improving users' experience.

Among them, after the heater assembly 20 is reset, that the heater assembly 20 continuously heats, and stops heating until a preset condition is met can specifically be that the heater assembly 20 continuously heats for a preset time and then stops heating, or that heating is stopped when a temperature of the heater assembly 20 increases to a preset temperature, etc. Among them, the preset time and the preset temperature can be flexibly set according to needs and stored in a control circuit board of the electronic atomizing device 100, this embodiment of the present application do not specifically limit here.

Specifically, as shown in FIG. 2, in this embodiment, the heater assembly 20 is disposed at a bottom of the smoke tube 10, connected in transmission with the reset member, and disposed slidably relative to the smoke tube 10.

Among them, that the heater assembly 20 is connected in transmission with the reset member means that: the reset member can drive the heater assembly 20 to move through direct contact with the heater assembly 20; the reset member can also contact the heater assembly 20 through an intermedium component, thus the intermedium component is driven by the reset member, the intermedium component drives the heater assembly 20, so that the heater assembly 20 is moved. When a cigarette 200 is inserted in the smoke tube 10 along a direction of the arrow shown in the figure, the cigarette 200 pushes the heater assembly 20 to slide relative to the smoke tube 10 and thereby triggers the inductive switch, the inductive switch is turned on to make the heater assembly 20 be electrically connected with the battery 40; the heater assembly 20 emits heat to heat the cigarette 200 located in the smoke tube 10. At the same time, the reset member applies a reset force to the heater assembly 20; when a force applied on the cigarette 200 and used to insert the cigarette 200 into the smoke tube 10 is removed, the reset member drives the heater assembly 20 to move towards a direction approaching the cigarette 200 and pushes the cigarette 200 to move synchronously, until the heater assembly 200 restores to an original position.

Among them, the smoke tube 10 is a tubular body of which an inner diameter is in correspondence with a diameter of the cigarette 200. Optionally, a surface of a sidewall of the smoke tube 10 can be set to be corrugated, so as to increase friction between the smoke tube 10 and the cigarette 200 and prevent the cigarette 200 from falling out of the smoke tube 10 during a heating process. Moreover, when the friction between the smoke tube 10 and the cigarette 200 is greater than resistance of inserting the heater assembly 20 into the cigarette 200, in a process of resetting the heater assembly 20 by the reset member, the cigarette 200 does not move, but the heater assembly 20 moves toward the direction approaching the cigarette 200; the heater assembly 20 will be further inserted inside the cigarette 200 to increase a contact area between the cigarette 200 and the heater assembly 20, improve heating efficiency of the heater assembly 20, and save electric energy.

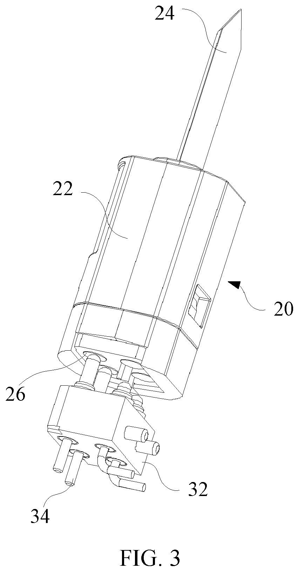

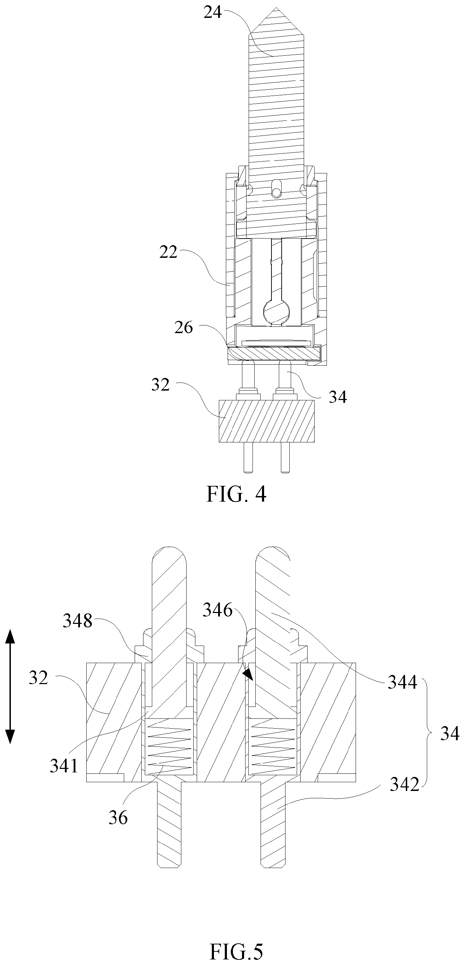

Referring to FIG. 2 to FIG. 4, FIG. 3 is a schematic view of an isometric structure of a heater assembly in FIG. 2, and FIG. 4 is a schematic view of a cut-away structure of the heater assembly in FIG. 3. In this embodiment, the heater assembly 20 includes a base 22 and a heating member 24, the heating member 24 is connected with the base 22, and an end of the heating member 24 distancing from the base 22 is at least partially located in the smoke tube 10.

Specifically, a bottom of the smoke tube 10 defines an avoidance hole 12, the base 22 is disposed at an outside of the bottom of the smoke tube 10, an end of the heating member 24 is connected to the base 22, another end of the heating member 24 is inserted into the smoke tube 10 through the avoidance hole 12 to heat the cigarette 200 in the smoke tube 10.

Among them, a size of a cross-section of the avoidance hole 12 is less than a size of a cross-section of the cigarette 200, so as to avoid the cigarette 200 from passing through the avoidance hole 12, and thereby avoid the cigarette 200 with a too high temperature from passing through the smoke tube 10 and damaging components such as a circuit board in the electronic atomizing device 100. A shape of the avoidance hole 12 can be rectangular, circular, oval, etc., and can specifically set according to a shape of the heating member 24, embodiments of the present application do not specifically limit here.

As shown in FIG. 3 and FIG. 4, in this embodiment, the heating member 24 can be in a flat shape so that a contact area between the heating member 24 and the cigarette 200 is increased, a heating rate is accelerated, and friction resistance of the heating member 24 being inserted into the cigarette 200 can be reduced. An end of the heating member 24 close to the cigarette 200 is triangular, which can further reduce the friction resistance of the heating member 24 being inserted into the cigarette 200 and facilitate insertion of the cigarette 200.

In other embodiments, the heating member 24 can also be in a cylindrical shape, and an end of the cylindrical heating member 24 close to the cigarette 200 is in a conical shape. The heating member 24 set to be cylindrical can improve structural stiffness of the heating 24 and prevent the heating member 24 from being broken or generating deformation and then affecting use during a process of being inserted into the cigarette 200. In other embodiments, it is also possible to set heating members 24 in other shapes, and the present application does not specifically limit here.

Among them, in some embodiments, the reset member can be a resilient body disposed at an end of the heater assembly 20 distancing from the smoke tube 10. The cigarette 200, when being inserted into the smoke tube 10, will push the heater assembly 20 to slide relative to the smoke tube 10 and then press the resilient body. When the heater assembly 20 starts heating, an acting force of resilient deformation of the resilient member pushes the heater assembly 20 to reset.

Referring to FIG. 4 and FIG. 5, FIG. 5 is a schematic view of a cut-away structure of a reset member in FIG. 3. In this embodiment, the heater assembly 20 has a power connection terminal 26, and the reset member includes an electrode seat 32, a power electrode 34, and a resilient member 36. The electrode seat 32 is disposed at a side of the heater assembly 20 distancing from the smoke tube 10, the power electrode 34 is disposed on the electrode seat 32, the resilient member 36 is disposed in the power electrode 34 to make the power electrode 34 resiliently abut with the power connection terminal 26, and the power electrode 34 is electrically connected with the battery 40 (shown in FIG. 2) through the circuit board 70 to power the heater assembly 20 when the inductive switch is turned on.

Specifically, the power connection terminal 26 is disposed on the base 22, and the power connecting pin 26 is electrically connected with the heating member 24. The electric connection between the power connection terminal 26 and the heating member 24 can adopt, for example, conductive wires to implement electric connection, and embodiments of the present application do not specifically limit the manner of the electric connection between the power connection terminal 26 and the heating member 24.

Optionally, in this embodiment, the number of the power connection terminals 26 is two, and the two power connection terminals 26 are electrically connected with the heating member 24 respectively. The number of the power electrodes 34 is also two, and the two power electrodes 34 are electrically connected. Each power electrode 34 is disposed in correspondence with one power connection terminal 26. By electrically connecting the two power connection terminals 26 with the heating member 24 respectively, the two power electrodes 34 are electrically connected; when the power electrodes 34 contact with corresponding power connection terminals 26, it is possible to supply power the heating member 24, and thus working stability of the heating member 24 is improved.

Among them, the manner of electrically connect the two power connection terminals 26 with the heating member 24 respectively can be, for example, disposing two conductive wires inside the heater assembly 20, wherein two ends of each conductive wire are respectively connected to one power connection terminal 26 and the heating member 24.

Further, as shown in FIG. 5, the power electrode 34 includes a mounting part 342 and an abutting part 344, the mounting part 342 is disposed on the electrode seat 32 and electrically connected with the battery 40 through the circuit board 70, a surface of the mounting part 342 close to the heater assembly 20 defines a mounting hole 346, the abutting part 344 is slidably inserted in the mounting hole 346 along the direction of the arrow shown in the figure, the resilient member 36 is received in the mounting hole 346 and sandwiched between a bottom wall of the mounting hole 346 and an end surface of the abutting part 344, and another opposite end surface of the abutting part 344 protrudes from the mounting part 342.

Specifically, in this embodiment, the mounting part 342 runs through the electrode seat 32 along a sliding direction of the heater assembly 20, an end of the mounting part 342 distancing from the heater assembly 20 is exposed from the electrode seat 32 and then electrically connected with the circuit board 70, and the circuit board 70 is electrically connected with the battery 40. An end of the mounting part 342 close to the heater assembly 20 defines the mounting hole 346, the mounting hole 346 is a blind hole, and an axis of the mounting hole 346 is also disposed along the sliding direction of the heater assembly 20. The resilient member 36 is located in the mounting hole 346, one end thereof resiliently abuts against a bottom wall of the mounting hole 346, and another end thereof abuts against an end surface of the abutting part 344. When there is no external acting force acting on the abutting part 344, a resilient acting force of the resilient member 35 drives the abutting part 344 to distance from a bottom wall of the mounting part 342, such that a height of the power electrode 34 is the maximum. When an external acting force acts on the abutting part 344, the resilient member 36 is pressed by the abutting part 344 to be compressed and thereby move towards a direction approaching the mounting part 342.

In this embodiment of the present application, by integrating the resilient element 36 within the power electrode 34, on the one hand, in the process of assembling and forming the reset member, the resilient element 36 can be arranged inside the reset member, thereby making subsequent assembly and disassembly of the electronic atomization device 100 be more convenient; on the other hand, due to restricting effect of the mounting hole 346 on the resilient element 36, compression and recovery processes of the resilient element 36 can also be more stable, so that stability of electric connection between the abutting part 344 and the power connection terminal 26 is higher.

Among them, both the mounting part 342 and the abutting part 344 are provided as conductive members for electrically connecting the power connection terminal 26 with the battery 40. The mounting part 342 and the abutting part 344 may be made of, for example, a metal or alloy having electrical conductivity. Commonly used metals or alloys include, but are not limited to, copper, copper alloys, aluminum, aluminum alloys, iron, iron alloys, nickel, nickel alloys, gold, gold alloys, silver, silver alloys, platinum group, platinum group alloys, chromium, chromium alloys, magnesium, magnesium alloy, tungsten, tungsten alloy, molybdenum, molybdenum alloy, lead, lead alloy, tin, tin alloy, indium, indium alloy, zinc or zinc alloy, etc. In addition, materials of the mounting part 342 and the abutting part 344 may be the same or different, and the materials of the mounting part 342 and the abutting part 344 are not limited in the present application.

Further, as shown in FIG. 5, an inner surface of a circumference of the mounting hole 346 protrudes inwards to define a limiting portion 348, an end of the abutting part 344 inserted in the mounting hole 346 is provided with a blocking portion 341, a cross-sectional area of the blocking portion 341 being perpendicular to a moving direction of the abutting part 344 is larger than an area of a region enclosed by the limiting portion 348, and another end of the abutting part 344 runs through and extends out of the region enclosed by the limiting portion 348.

Specifically, the limiting portion 348 is arranged to protrude from an inner surface of the mounting hole346, and the area of the region enclosed by the limiting portion 348 is less than the cross-sectional area of the blocking portion 341, thereby preventing the abutting part 344 from ejecting out of the mounting hole 346 under the resilient action of the resilient member 36. A cross-sectional area of the abutting part 344 is less than or equal to the area of the region enclosed by the limiting portion 348, so that the abutting part 344 can extend out of the mounting part 342 and abut against and electrically connect with the power connection terminal 26.

Among them, in some embodiments, the number of the limiting portion 348 can be plural, and a plurality of limiting portions 348 can be arranged at intervals along a circumference of the mounting hole 346. In this embodiment, the limiting portion 348 can be an annular limiting portion, the annular limiting portion is arranged around the circumference of the mounting hole 346; by disposing the annular limiting portion, it is possible to make the abutting part 344 to be subjected to a force more evenly.

Further, in some embodiments, the cross-sectional area of the abutting part 344 can be set to be equal to the area of the region enclosed by the limiting portion 348, and a shape of the cross-section of the abutting portion 344 is adapted to a shape of the region enclosed by the limiting portion 348, so that an outer sidewall of the abutting part 344 is in tight contact with an inner sidewall of the limiting portion 348. By disposing the outer sidewall of the abutting part 344 to be in tight contact with the inner sidewall of the limiting portion 348, the abutting part 344 can be easily guided, thereby making movement of the abutting part 344 be more stable and avoiding shaking. At the same time, by setting the tight contact between the abutting part 344 and the limiting portion 348, electric connection between the abutting part 344 and the mounting portion 342 can also be realized, so as to facilitate electrical connection between the abutting part 344 and the battery 40, thus the power connection terminal 26 is electrically connected with the battery 40, thereby facilitating supplying power to the heating member 24.

In other embodiments, the cross-sectional area of the blocking portion 341 can also be set to be equal to the cross-sectional area of the mounting hole 346, and a shape of the cross-section of the blocking portion 341 is adapted to a shape of the cross-section of the mounting hole 346, so that an outer sidewall of the blocking portion 341 is in tight contact with an inner sidewall of the mounting hole 346. By disposing the outer sidewall of the blocking portion 341 to be in tight contact with the inner sidewall of the mounting hole 346, the abutting part 344 can be easily guided, thereby making movement of the abutting part 344 be more stable and avoiding shaking. At the same time, by setting the tight contact between the sidewall of blocking portion 341 and the sidewall of the mounting hole 346, electric connection between the abutting part 344 and the mounting portion 342 can also be realized, so as to facilitate electrical connection between the abutting part 344 and the battery 40, thus the power connection terminal 26 is electrically connected with the battery 40, thereby facilitating supplying power to the heating member 24.

In other embodiments, it is also possible that the resilient member 36 is configured as a conductive member, and the resilient member 36 is electrically connected with the mounting part 342 and the abutting part 344 respectively.

For example, in one embodiment, a length of the resilient member 36 when being subjected to no force can be set to be larger than a distance between an end of the abutting part 344 and a bottom wall of the mounting hole 346, such that the resilient member 36 is always in a compressed state, that is, two opposite ends of the resilient member 36 are respectively always in contact with the end of the abutting part 344 and the bottom wall of the mounting hole 346 for electrical connection. In another embodiment, it is also possible that two ends of the resilient member 36 are respectively connected with the bottom wall of the mounting hole 346 and the end of the abutting part 344 by means of welding or adhesion with conductive glue, thereby realizing electrical connection.

Optionally, in this embodiment, a spring is used as the resilient member. Advantage of using the spring is that the spring is a common resilient member 36, it is convenient to replace when the component is damaged; and the spiring has good stretchability and is easy to be squeezed, when being squeezed to a certain extent, a reaction force is large.

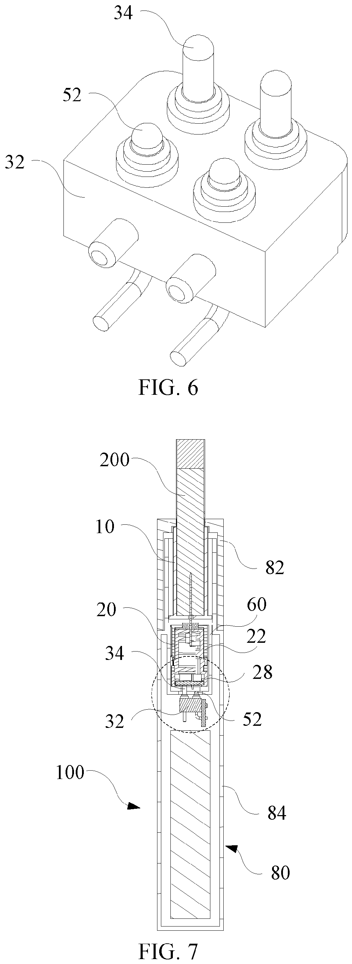

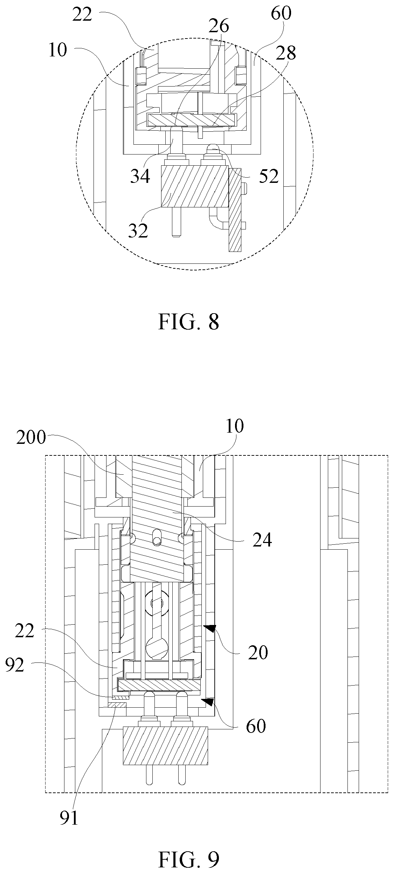

Further, as shown in FIG. 6 to FIG. 8, FIG. 6 is a schematic view of an isometric structure of the reset member in FIG. 3, FIG. 7 is another schematic view of the cut-away structure of the electronic atomizing device in FIG. 1, FIG. 8 is a partially enlarged structural schematic view of the electronic atomizing device in FIG. 7. The heater assembly 20 further has a detection connection terminal 28, the inductive switch is a detection electrode 52, the detection electrode 52 is disposed on the electrode seat 32, and the detection electrode 52 is disposed to be spaced from the detection connection terminal 28; when the cigarette 200 is inserted in the smoke tube 10, the heater assembly 20 abuts against and presses the power electrode 34 to make the detection electrode 52 contact the detection connection terminal 28 and form a sensing signal.

Specifically, the detection connection terminal 28 is disposed on the base 22 of the heater assembly 20; when the detection electrode 52 contacts the detection connection terminal 28, a sensing signal is generated. The detection electrode 52 and the power electrode 34 are located on a surface of the electrode seat 32 facing the base 22, and the detection electrode 52 is disposed to be spaced from the detection connection terminal 28.

Among them, in one embodiment, the number of the detection connection terminal 28 can be one; the number of the detection electrode 52 is one, and it is arranged in correspondence with the detection connection terminal 28. When the detection electrode 52 contacts the detection connection terminal 28, a sensing signal can be generated.

Alternatively, in this embodiment, the number of the detection connection terminal 28 is two, and the two detection connection terminals 28 are electrically connected. Each detection electrode 52 is set in correspondence with one detection connection terminal 28. By electrically connecting the two detection connection terminals 28, and electrically connecting the two detection electrodes 52 with the circuit board 70 respectively, when the two detection electrodes 52 respectively abut against the two detection connection terminals 28 correspondingly, a conductive loop can be formed so as to generate a loop signal (i.e., a sensing signal). In this way, only when stably abutment is formed between the base 22 and the detection electrodes 52, a sensing signal can be generated, thereby ensuring precision of detection.

Alternatively, in another embodiment, it is possible to set the number of the detection connection terminal 28 as two, the two the detection connection terminal 28 are electrically connected. The number of the detection electrode 52 is also two, the two detection electrodes 52 are electrically connected and further electrically connected with the circuit. Each detection electrode 52 is set in correspondence with one detection connection terminal 28. At this time, when one of the detection electrodes 52 contacts one of the detection connection terminals 28, triggering can be realized, so that detection sensitivity and working stability of the inductive switch is improved.

Among them, a manner of electrically connecting the two detection connection terminals 28 can be, for example, setting conductive wires in the base 22, wherein the conductive wires are respectively connected with the two detection connection terminals 28.

Further, as shown in FIG. 6 to FIG. 8, a height of the detection electrode 52 protruding from a surface of the electrode seat 32 is less than a first height but larger than or equal to a second height; wherein the first height is a distance between the heater assembly 20 and the electrode seat 32 when there is no cigarette 200 in the smoke tube 10, and the second height is a height of the power electrode 34, when being completely pressed, protruding from the surface of the electrode seat 32.

Specifically, when there is no cigarette 200 in the smoke tube 10, a distance between the heater assembly 10 and the electrode seat 32 is less than a height of the power electrode 34, when not being compressed, protruding from the surface of the electrode seat 32, such that the power electrode 34 is always in an elastically compressed state and abuts against the power connection terminal 26, and thus connection stability between the power electrode 34 and the power connection terminal 26 is improved. By setting the height of the detection electrode 52 protruding from the surface of the electrode seat 32 to be less than the first height, it is possible that the detection electrode 52 and the detection connection terminal 28 are spaced from each other when there is no cigarette 200 in the smoke tube 10. By setting the height of the detection electrode 52 protruding from the surface of the electrode seat 32 is larger than or equal to the height of the power electrode 34, when being completely pressed, protruding from the surface of the electrode seat 32, it is possible that the detection electrode 52 contacts the detection connection terminal 28 when the power electrode 34 is compressed, thereby realizing detection of insertion of the cigarette 200.

Further, as shown in FIG. 7 and FIG. 8, the electronic atomizing device 100 further includes a casing 80 and a base mounting cavity 60, both the base mounting cavity 60 and the smoke tube 10 are located in the casing 80, the base mounting cavity 60 is communicated with the smoke tube 10, and the base 22 is slidably disposed in the base mounting cavity 60. By disposing the base mounting cavity 60 configured to receive the heater assembly 20, it can be convenient to fix the heater assembly 20, and the limiting action of the base mounting cavity 60 on the heater assembly 20 can also make movement of the heater assembly 20 be more stable.

Among them, as shown in FIG. 7, in this embodiment, the casing 80 includes an upper case 82 and a lower case 84, the smoke tube 10 is detachably mounted in the upper case 82, the battery 40 and the circuit board 70 (shown in FIG. 2) are received in the lower case 84, and the upper case 82 covers at an end of the lower case 84.

In the above embodiment, detection of insertion of a cigarette 200 is realized through cooperation between the detection electrodes 52 and the detection connection terminals 28. In other embodiments, the detection electrodes 52 may also be not set, and detection is performed by other types of inductive switches.

For example, in some embodiments, the inductive switch includes a Hall sensor and a magnet corresponding to the Hall sensor, one of the Hall sensor and the magnet is disposed in the base mounting cavity and the other is disposed on the base; when the Hall sensor senses that a magnet field strength of the magnet is larger than a preset value, a sensing signal is generated.

Specifically, as shown in FIG. 9, FIG. 9 is a partially enlarged schematic view of a cut-away structure of an electronic atomizing device in another embodiment of the present application. In this embodiment, it is possible to dispose a Hall sensor 91 at a bottom of the base mounting cavity 60 and fixedly dispose a magnet 92 on the base 22 of the heater assembly 20. When a cigarette 200 is inserted into the smoke tube 10, the cigarette 200 abuts against the heating member 24 to make the heater assembly 20 move toward the bottom of the base mounting cavity 60. The magnet 92 gradually approaches the Hall sensor 91, when the Hall sensor 91 senses that a magnet field strength of the magnet 92 is larger than a preset value, the Hall sensor 91 generates a sensing signal to make the inductive switch be turned on, and thus control the heating member 24 to start heating the cigarette 200.

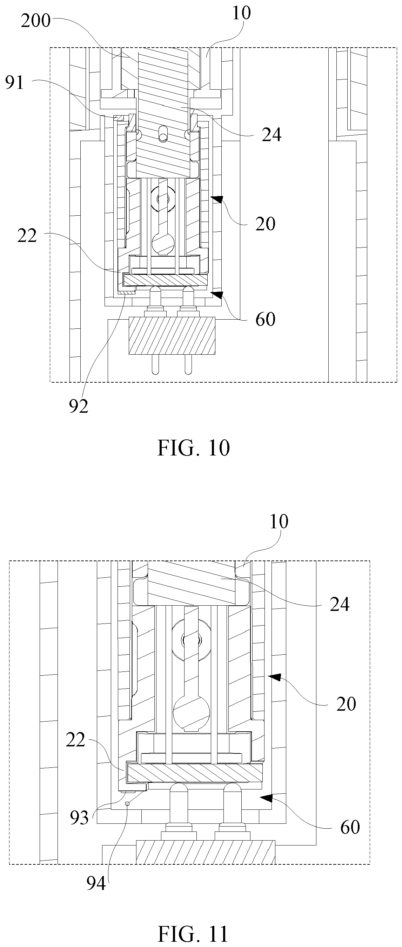

In another embodiment, as shown in FIG. 10, FIG. 10 is a partially enlarged schematic view of a cut-away structure of an electronic atomizing device in another embodiment of the present application. It is also possible to dispose the Hall sensor 91 at a side of the base mounting cavity 60 close to the smoke tube 10 and fixedly dispose the magnet 92 on the base 22 of the heater assembly 20. When a cigarette 200 is inserted into the smoke tube 10, the cigarette 200 abuts against the heating member 24 to make the heater assembly 20 move toward the bottom of the base mounting cavity 60. The magnet 92 gradually distances from the Hall sensor 91, when the Hall sensor 91 senses that a magnet field strength of the magnet 92 is less than a preset value, the Hall sensor 91 generates a sensing signal, and thus control the heating member 24 to start heating the cigarette 200.

Understandably, in another embodiment, it is also possible to dispose the Hall sensor and the magnet inversely, that is, dispose the magnet in the base mounting cavity and dispose the Hall sensor on the base. The specific working manner can refer to the description in the above embodiments, and is not repeated here.

In other embodiments, the inductive switch can be a proximate sensor, the proximate sensor is disposed on the heater assembly, the base mounting cavity, or the reset member.

For example, in one embodiment, the proximity sensor can be disposed at a side of the heater assembly close to the base mounting cavity; when a cigarette is inserted into the smoke tube, the heater assembly will be pushed to move toward the bottom of the base mounting cavity; when the heater assembly moves to be at a certain distance from the bottom of the base mounting cavity, the proximity sensor will generate a sensing signal, and thus control the heating member to start heating the cigarette.

In another embodiment, the proximity sensor can be disposed at the bottom of the base mounting cavity; when a cigarette is inserted into the smoke tube, the heater assembly will be pushed to move toward the bottom of the base mounting cavity; when the heater assembly moves to be at a certain distance from the bottom of the base mounting cavity, the proximity sensor will generate a sensing signal, and thus control the heating member to start heating the cigarette.

In another embodiment, since the reset member is disposed at the side of the heater assembly distancing from the smoke tube, it is possible to dispose the proximity sensor on the reset member; when a cigarette is inserted into the smoke tube, the heater assembly will be pushed to move toward a direction approaching the reset member; when the heater assembly moves to be at a certain distance from the reset member, the proximity sensor will generate a sensing signal, and thus control the heating member to start heating the cigarette.

In some embodiments, the inductive switch is a microswitch, the microswitch is disposed on a bottom of the heater assembly, a side surface of the heater assembly, a bottom of the base mounting cavity, a side wall of the base mounting cavity, or the reset member.

Among them, the microswitch may include a static contact piece and a moving contact piece. When the moving contact piece is in contact with the static contact piece, a sensing signal will be generated.

In one embodiment, as shown in FIG. 11, FIG. 11 is a partially enlarged schematic view of a cut-away structure of an electronic atomizing device in another embodiment of the present application. A microswitch can be disposed at a bottom of the heater assembly 20, that is, the microswitch is disposed at a side of the base 22 close to a bottom of the base mounting cavity 60; wherein the static contact piece 93 is disposed on the base 22, one end of the moving contact piece 94 is connected with the base 22, and another end of the moving contact piece 94 extends toward a direction distancing from the base 22 and disposed in correspondence with the static contact piece 93. When a cigarette 200 is inserted into the smoke tube 10, the base 22 will be pushed to move toward a direction approaching a bottom of the base mounting cavity 60; when the heater assembly 20 moves such that the moving contact piece 94 abuts against the bottom of the base mounting cavity 60 and generates deformation, and the moving contact piece 94 is in contact with the static contact piece 93, the microswitch will generate a sensing signal to make the inductive switch be turned on, and thus control the heating member 24 to start heating the cigarette 200.

In another embodiment, the microswitch can be disposed on a side surface of the heater assembly. Among them, the static contact piece is disposed on a side surface of the base, one end of the moving contact piece is connected with the base, and another end of the moving contact piece extends toward a direction distancing from the base and disposed in correspondence with the static contact piece. A side of a side wall of the base mounting cavity close to a bottom of the base mounting cavity is provided with an abutting block, when a cigarette is inserted into the smoke tube, the base will be pushed to move toward a direction approaching the bottom of the base mounting cavity; when the heater assembly moves such that the moving contact piece is pushed by the abutting block to generate deformation, and the moving contact piece is in contact with the static contact piece, the microswitch will generate a sensing signal to make the inductive switch be turned on, and thus control the heating member to start heating the cigarette.

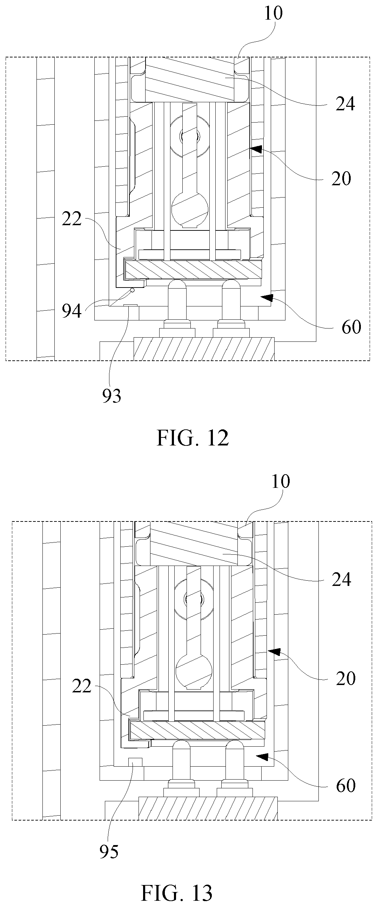

In another embodiment, as shown in FIG. 12, FIG. 12 is a partially enlarged schematic view of a cut-away structure of an electronic atomizing device in another embodiment of the present application. The microswitch can be disposed at a bottom of the base mounting cavity 60. Among them, the static contact piece 93 is disposed at the bottom of the base mounting cavity 60, one end of the moving contact piece 94 is connected with a bottom wall of the base mounting cavity 60, and another end of the moving contact piece 94 extends toward a direction approaching the heater assembly 20 and is disposed in correspondence with the static contact piece 93. When a cigarette 200 is inserted into the smoke tube 10, the base 22 will be pushed to move toward a direction approaching the bottom of the base mounting cavity 60; when the heater assembly 20 moves such that the moving contact piece 94 is pressed and generates deformation, and the moving contact piece 94 is in contact with the static contact piece 93, the microswitch will generate a sensing signal to make the inductive switch be turned on, and thus control the heating member 24 to start heating the cigarette 200.

Understandably, in another embodiment, it is also possible to dispose the moving contact piece and the static contact piece inversely, which can specifically refer to the description in the above embodiments, and is not repeated here.

In some embodiments, the inductive switch can be set as a pressure sensor, the pressure sensor is disposed on a bottom of the heater assembly, in the base mounting cavity, or on the reset member.

For example, in an embodiment, the pressure sensor can be disposed at a bottom of the heater assembly, that is, the pressure sensor is disposed at a side of the base close to a bottom of the base mounting cavity. When a cigarette 200 is inserted into the smoke tube, the base will be pushed to move toward a direction approaching the bottom of the base mounting cavity; when the base moves to be in contact with the pressure sensor disposed on the bottom of the base mounting cavity, the pressure sensor detects an action force of the base thereon; when the action force detected by the pressure sensor is larger than a preset value, a sensing signal will be generated, and thus the heating member is controlled to start heating the cigarette.

In another embodiment, as shown in FIG. 13, FIG. 13 is a partially enlarged schematic view of a cut-away structure of an electronic atomizing device in another embodiment of the present application. A pressure sensor 95 can be disposed in the base mounting cavity 60. In this embodiment, the pressure sensor 95 can be disposed at a bottom of the base mounting cavity 60; when a cigarette 200 is inserted into the smoke tube 10, the base 22 will be pushed to move toward a direction approaching the bottom of the base mounting cavity 60; when the base 22 moves to be in contact with the pressure sensor 95 in the base mounting cavity 60, the pressure sensor 95 detects an action force of the base 22 thereon; when the action force detected by the pressure sensor 95 is larger than a preset value, a sensing signal will be generated, and thus the heating member 24 is controlled to start heating the cigarette 200.

In another embodiment, the pressure sensor can also be disposed at a side of a sidewall of the base mounting cavity close to the bottom thereof.

In another embodiment, the pressure sensor can be disposed on the reset member, that is, disposed at a side of the reset member close to be base. When a cigarette is inserted into the smoke tube, the base will be pushed to move toward a direction approaching the reset member; when the base moves to be in contact with the pressure sensor on the reset member, the pressure sensor detects an action force of the base thereon; when the action force detected by the pressure sensor is larger than a preset value, a sensing signal will be generated, and thus the heating member is controlled to start heating the cigarette.

Among them, the size of the preset value of the action force can be flexibly set according to requirements, and is not specifically limited by embodiments of the present application.

Differing from the case of the prior art, in embodiments of the present application, the electronic atomizing device 100 is provided therein with an inductive switch, and it is continuously detected through the inductive switch whether there is a cigarette 200 inserted in the smoke tube 10; and when it is detected that a cigarette 200 is inserted in the smoke tube 10, the heater assembly 20 is controlled to emit heat and used to heat the cigarette 200. In this way, automatic detection of insertion of the cigarette 200 can be achieved, a situation of dry burning of heater assembly 20 caused when no cigarette 200 is inserted is avoided, and an intelligent degree of the electronic atomizing device 100 can be improved. In addition, a reset force applied by the reset member to the heater assembly 20 can reset the heater assembly 20 after the heater assembly 20 emits heat, so that the heater assembly 20 continuously heats, and stops heating until a preset condition is met; thus, this embodiment can realize continuous heating of the heater assembly 20 by only one triggering, and avoid a situation that heating for the cigarette 200 is stopped due to accidental disconnection of the inductive switch in a heating process, thereby improving users' experience.

The above description is only embodiments of the present application, and are not intended to limit the patent scope of the present application. Any equivalent structure or equivalent process transformation made using the content of the description and drawings of the present application, or directly or indirectly applications in other related technical fields, are similarly included within the patent protection scope of the present application.

## Claims

1. An electronic atomizing device, wherein the electronic atomizing device comprises a smoke tube, a heater assembly, an inductive switch, and a reset member; the smoke tube is configured to insert a cigarette; the heater assembly is at least partially located in the smoke tube and configured to heat the cigarette; the heater assembly is capable of moving in the smoke tube to turn on the inductive switch and enable a battery to power the heater assembly; the reset member is configured to apply reset force to the heater assembly.

2. The electronic atomizing device according to claim 1, wherein the heater assembly is connected in transmission with the reset member, and is disposed slidably relative to the smoke tube.

3. The electronic atomizing device according to claim 2, wherein the electronic atomizing device further comprises a circuit board, and the heater assembly comprises a power connection terminal; the reset member comprises an electrode seat, a power electrode, and a resilient member, the electrode seat is disposed at a side of the heater assembly distancing from the smoke tube, the power electrode is disposed on the electrode seat, the resilient member is disposed in the power electrode to make the power electrode resiliently abut with the power connection terminal, and the power electrode is electrically connected with the battery through the circuit board to power the heater assembly when the inductive switch is turned on.

4. The electronic atomizing device according to claim 3, wherein the power electrode comprises a mounting part and an abutting part, the mounting part is disposed on the electrode seat and electrically connected with the battery, a surface of the mounting part close to the heater assembly defines a mounting hole, the abutting part is slidably inserted in the mounting hole, the resilient member is received in the mounting hole and sandwiched between a bottom wall of the mounting hole and an end surface of the abutting part, and another opposite end surface of the abutting part protrudes from the mounting part.

5. The electronic atomizing device according to claim 4, wherein an inner surface of a circumference of the mounting hole protrudes inwards to define a limiting portion, an end of the abutting part inserted in the mounting hole is provided with a blocking portion, a cross-sectional area of the blocking portion perpendicular to a moving direction of the abutting part is larger than an area of a region enclosed by the limiting portion, and another end of the abutting part runs through and extends out of the region enclosed by the limiting portion.

6. The electronic atomizing device according to claim 5, wherein a side wall of the abutting part is in contact with a side wall of the limiting portion for electrically connection; or a side wall of the blocking portion is in contact with a side wall of the mounting hole for electrically connection; or the resilient member is a conductive member, and the resilient member is electrically connected with the mounting part and the abutting part respectively.

7. The electronic atomizing device according to any one of claims 3-6, wherein the heater assembly further has a detection connection terminal, the inductive switch is a detection electrode, the detection electrode is disposed on the electrode seat, and the detection electrode is disposed to be spaced from the detection connection terminal; when the cigarette is inserted in the smoke tube, the heater assembly abuts against and presses the power electrode to make the detection electrode contact the detection connection terminal and form a sensing signal.

8. The electronic atomizing device according to claim 7, wherein the detection electrode and the power electrode are located on a surface of the electrode seat facing the heater assembly, and a height of the detection electrode protruding from a surface of the electrode seat is less than a first height but larger than or equal to a second height; wherein the first height is a distance between the heater assembly and the electrode seat when there is no cigarette in the smoke tube, and the second height is a height of the power electrode protruding from the surface of the electrode seat when being completely pressed.

9. The electronic atomizing device according to claim 1, wherein the heater assembly comprises a base and a heating member, the heating member is connected with the base, and an end of the heating member distancing from the base is at least partially located in the smoke tube.

10. The electronic atomizing device according to claim 9, wherein the electronic atomizing device further comprises a casing and a base mounting cavity, both the base mounting cavity and the smoke tube are located in the casing, the base mounting cavity is communicated with the smoke tube, and the base is slidably disposed in the base mounting cavity.

11. The electronic atomizing device according to claim 10, wherein the inductive switch comprises a Hall sensor and a magnet corresponding to the Hall sensor, one of the Hall sensor and the magnet is disposed in the base mounting cavity and the other is disposed on the base; when the Hall sensor senses that a magnet field strength of the magnet is larger than a preset value, the Hall sensor generates a sensing signal.

12. The electronic atomizing device according to claim 10, wherein the inductive switch is a proximate sensor, the proximate sensor is disposed on the heater assembly, the base mounting cavity, or the reset member.

13. The electronic atomizing device according to claim 10, wherein the inductive switch is a microswitch, the microswitch is disposed on a bottom of the heater assembly, a side surface of the heater assembly, a bottom of the base mounting cavity, a side wall of the base mounting cavity, or the reset member.

14. The electronic atomizing device according to claim 10, wherein the inductive switch is a pressure sensor, the pressure sensor is disposed on a bottom of the heater assembly, in the base mounting cavity, or on the reset member.

15. The electronic atomizing device according to claim 1, wherein a surface of a sidewall of the smoke tube is in a corrugated shape, and friction between the smoke tube and the cigarette is greater than resistance of inserting the heater assembly into the cigarette.

16. The electronic atomizing device according to claim 1, wherein the reset member is a resilient body disposed at an end of the heater assembly distancing from the smoke tube.

17. The electronic atomizing device according to claim 5, wherein the number of the limiting portion is plural, and the plurality of limiting portions are arranged at intervals along a circumference of the mounting hole; or the limiting portion is an annular limiting portion, and the annular limiting portion is arranged around the circumference of the mounting hole.

18. The electronic atomizing device according to claim 7, wherein the number of the detection connection terminal is two, and the two detection connection terminals are electrically connected; the number of the detection electrode is two, both the two detection electrodes are electrically connected with the circuit board, each of the detection electrodes is disposed in correspondence with one of the detection connection terminals.

19. The electronic atomizing device according to claim 10, wherein the casing comprises an upper case and a lower case, the smoke tube is detachably mounted in the upper case, the battery is received in the lower case, and the upper case covers at an end of the lower case.

20. The electronic atomizing device according to claim 10, wherein the inductive switch comprises a Hall sensor and a magnet corresponding to the Hall sensor, the Hall sensor is disposed at a side of the base mounting cavity of the heater assembly close to the smoke tube, and the magnet is disposed on the base of the heater assembly; when the Hall sensor senses that a magnet field strength of the magnet is less than a preset value, the Hall sensor generates a sensing signal.
